# EUROPEAN PATENT APPLICATION

(11) **EP 4 620 843 A1**
(43) Date of publication of application: **24.09.2025**
(21) Application number: 22970033.1
(22) Date of filing: 27.12.2022
(51) Int. Cl.: B64U 50/33, B64U 10/16, B64U 10/60, B64U 50/11, B64U 50/19, B64U 50/20, B64U 101/10

(54) **UNMANNED AERIAL VEHICLE, AND CONTROL SYSTEM AND CONTROL METHOD OF UNMANNED AERIAL VEHICLE**

(71) Applicant: Kubota Corporation, Osaka 556-8601 (JP)
(72) Inventor: SEINO, Kohei, Sakai-shi, Osaka 590-0908 (JP); NAGASHIMA, Hiroyuki, Ota-shi, Gunma 379-2304 (JP); KITAGAWA, Hiroshi, Ota-shi, Gunma 379-2304 (JP); KAYANUMA, Hidetaka, Ota-shi, Gunma 379-2304 (JP)
(74) Representative: Cabinet Beau de Loménie
(86) International application number: PCT/JP2022/048182
(87) International publication number: WO 2024/142239

(57) **Abstract**

An unmanned aerial vehicle includes a plurality of rotors, a plurality of electric motors each configured to drive a respective one of the plurality of rotors, a power source, and a control device to control supply of first electric power from the power source to the plurality of electric motors and supply of second electric power from the power source to an external implement, and control operation of the plurality of electric motors. Upon detecting an abnormality in equipment included in the unmanned aerial vehicle, the control device stops the supply of the second electric power to the implement and maintains the supply of the first electric power to the plurality of electric motors to execute flight using the plurality of rotors.

## Description

### TECHNICAL FIELD

The present disclosure relates to unmanned aerial vehicles, and control systems and control methods for unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle including multiple rotary wings (Multi-Rotor UAV) is also called a "drone", "multirotor", or "multicopter", and is widely used for applications including aerial photography, surveying, logistics, and agricultural spraying.

Patent Document No. 1 describes an unmanned aerial vehicle (unmanned flying body) that changes its flight position in coordination with the operation of an agricultural machine.

### CITATION LIST

### PATENT LITERATURE

Patent Document No. 1: Japanese Patent Application Publication No. 2022-104737

### SUMMARY OF INVENTION

### TECHNICAL PROBLEM

The present disclosure provides systems capable of performing various ground operations by supplying power from an unmanned aerial vehicle to an implement connected to the unmanned aerial vehicle. The present disclosure further provides systems and methods for appropriately controlling an operation of an unmanned aerial vehicle when an abnormality occurs in equipment of the unmanned aerial vehicle while flying with an implement being powered.

### SOLUTION TO PROBLEM

In an exemplary and non-limiting embodiment, an unmanned aerial vehicle of the present disclosure includes a plurality of rotors, a plurality of electric motors each configured to drive a respective one of the plurality of rotors, a power source, and a control device. The control device is to control supply of first electric power from the power source to the plurality of electric motors and supply of second electric power from the power source to an external implement, and control operation of the plurality of electric motors. Upon detecting an abnormality in equipment included in the unmanned aerial vehicle, the control device stops the supply of the second electric power to the implement and maintains the supply of the first electric power to the plurality of electric motors to execute flight using the plurality of rotors.

In an exemplary and non-limiting embodiment, a control system for an unmanned aerial vehicle of the present disclosure is a system for controlling an unmanned aerial vehicle including a plurality of rotors, a plurality of electric motors each configured to drive a respective one of the plurality of rotors, a power source, and a coupling device that couples an implement that performs ground operations. The control system includes a control device to control supply of first electric power from the power source to the plurality of electric motors and supply of second electric power from the power source to the implement, and control operation of the plurality of electric motors. When the control device detects an abnormality in equipment included in the unmanned aerial vehicle, the control device stops the supply of the second electric power to the implement and maintains the supply of the first electric power to the plurality of electric motors to execute flight using the plurality of rotors.

In an exemplary and non-limiting embodiment, a control method for an unmanned aerial vehicle is a method for controlling an unmanned aerial vehicle including a plurality of rotors, a plurality of electric motors each configured to drive a respective one of the plurality of rotors, a power source, and a coupling device that couples an implement that performs ground operations. The control method includes controlling supply of first electric power from the power source to the plurality of electric motors and supply of second electric power from the power source to the implement, controlling operation of the plurality of electric motors, detecting an abnormality in equipment included in the unmanned aerial vehicle, and when the abnormality is detected, stopping the supply of the second electric power to the implement and maintaining the supply of the first electric power to the plurality of electric motors to execute flight using the plurality of rotors.

### ADVANTAGEOUS EFFECTS OF INVENTION

According to embodiments of unmanned aerial vehicles, and control systems and control methods of the present disclosure, when an equipment abnormality occurs in an unmanned aerial vehicle that is flying while supplying power to an implement, it is possible to appropriately control the operation of the unmanned aerial vehicle.

### BRIEF DESCRIPTION OF DRAWINGS

FIG. **1A** is a block diagram schematically showing several examples of rotation drive devices to rotate rotors in an unmanned aerial vehicle including a plurality of rotors.
FIG. **1B** is a plan view schematically showing one example of a basic configuration of an unmanned aerial vehicle including a plurality of rotors.
FIG. **1C** is a side view schematically showing one example of a basic configuration of an unmanned aerial vehicle including a plurality of rotors.
FIG. **1D** is a plan view schematically showing another example of a basic configuration of an unmanned aerial vehicle including a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3A** is a top view schematically showing a multicopter according to an embodiment of the present disclosure.
FIG. **3B** is a side view schematically showing the multicopter.
FIG. **4** is a block diagram showing an example of system configuration in the multicopter.
FIG. **5** is a flowchart showing the operation of the multicopter.
FIG. **6A** is a plan view showing one example of a flight path of the multicopter.
FIG. **6B** is a plan view showing another example of a flight path of the multicopter.
FIG. **7A** is a first figure showing an example of operation when an abnormality occurs in the main rotor drive system during operation.
FIG. **7B** is a second figure showing an example of operation when an abnormality occurs in the main rotor drive system during operation.
FIG. **7C** is a third figure showing an example of operation when an abnormality occurs in the main rotor drive system during operation.
FIG. **8** is a block diagram showing an example of system configuration in a battery-powered multicopter.
FIG. **9** is a block diagram showing an example of hardware configuration of the control device.
FIG. **10** is a diagram schematically showing an example of a communication network to which the multicopter is connected.

### DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

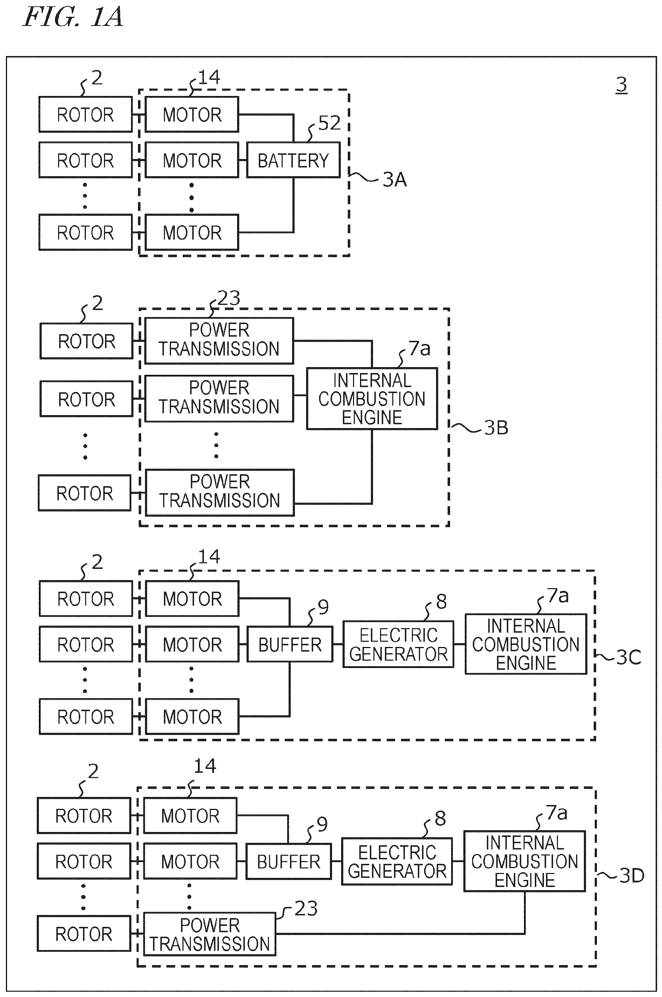

The configuration of rotation drive devices equipped in multicopters exists in various forms. FIG. **1A** is a schematic block diagram showing four examples of rotation drive device 3 in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

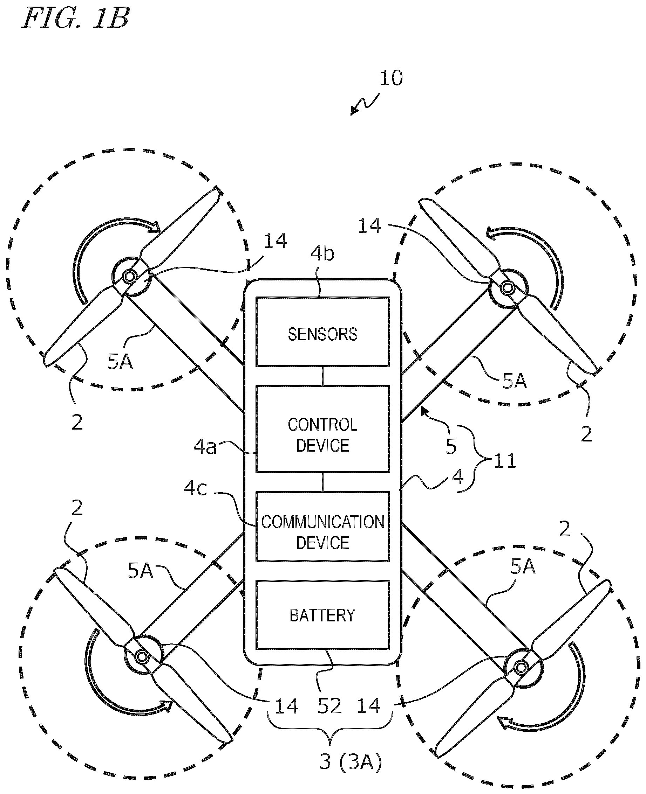

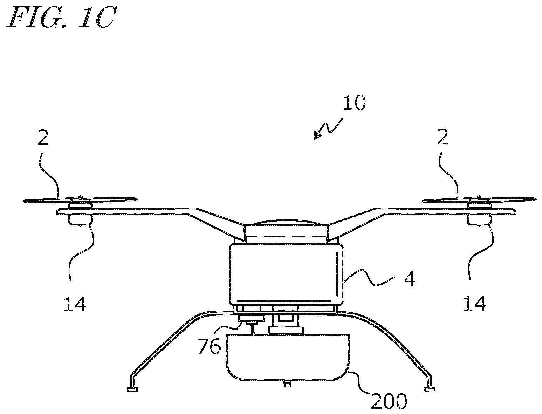

FIG. **1B** is a plan view schematically showing a basic configuration example of multicopter **10.** In the configuration example of FIG. **1B****,** a rotation drive device **3** includes the first rotation drive device **3A** shown in FIG. **1A****.** That is, in this example, rotation drive device **3 (3A)** includes motors **14** and a battery **52.** FIG. **1C** is a side view schematically showing the multicopter **10.**

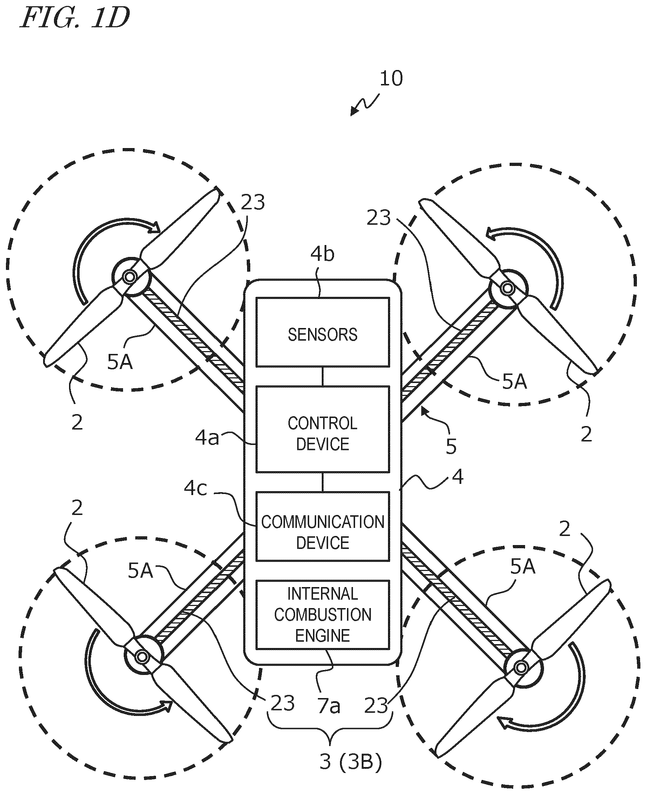

A multicopter **10** shown in Figs. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11".**

In the example of FIG. **1B****,** the multicopter **10** is a quad-type multicopter (quadcopter) including four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned further inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** includes a plurality of motors **14.** As mentioned above, the rotation drive device **3** may include the internal combustion engine **7a.**

FIG. **1D** is a plan view schematically showing a basic configuration example of a multicopter **10** including the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter includes an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may include mechanisms such as robotic hands. In that case, a single implement **200** can perform various ground operations. When the implement **200** includes space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** includes power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power.

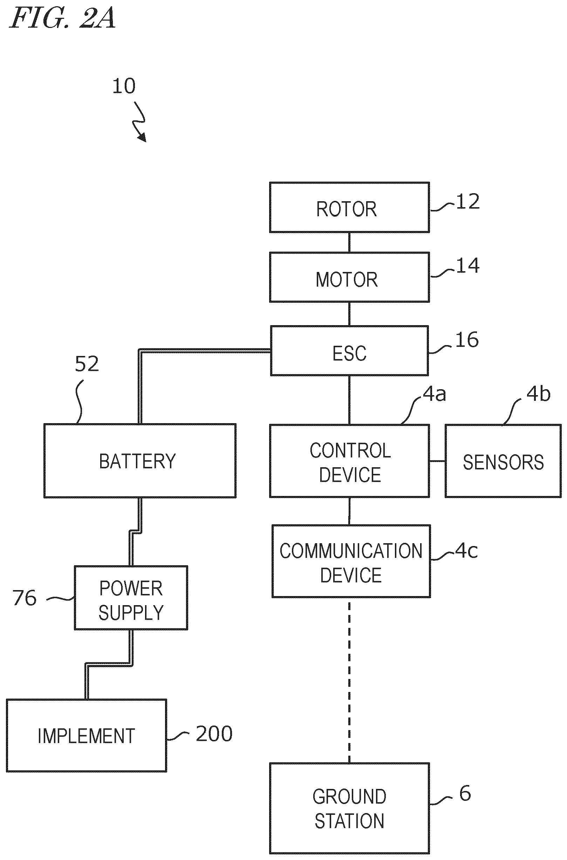

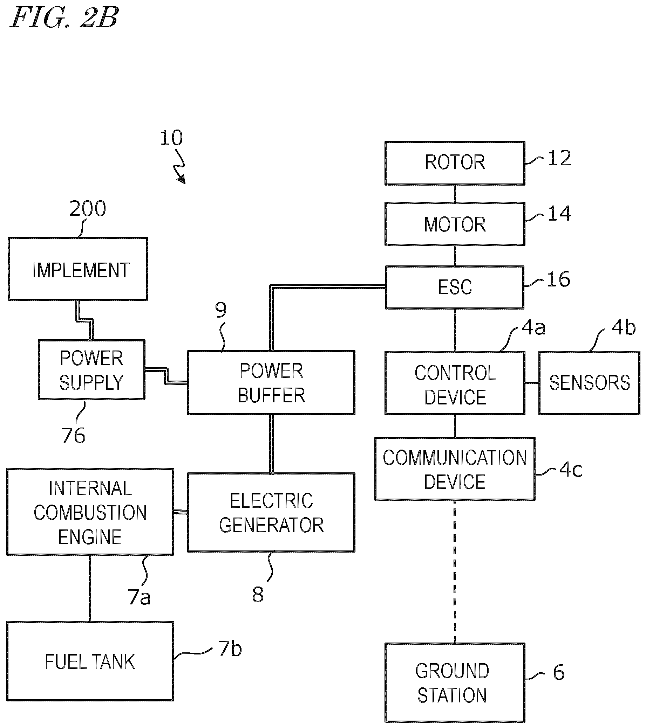

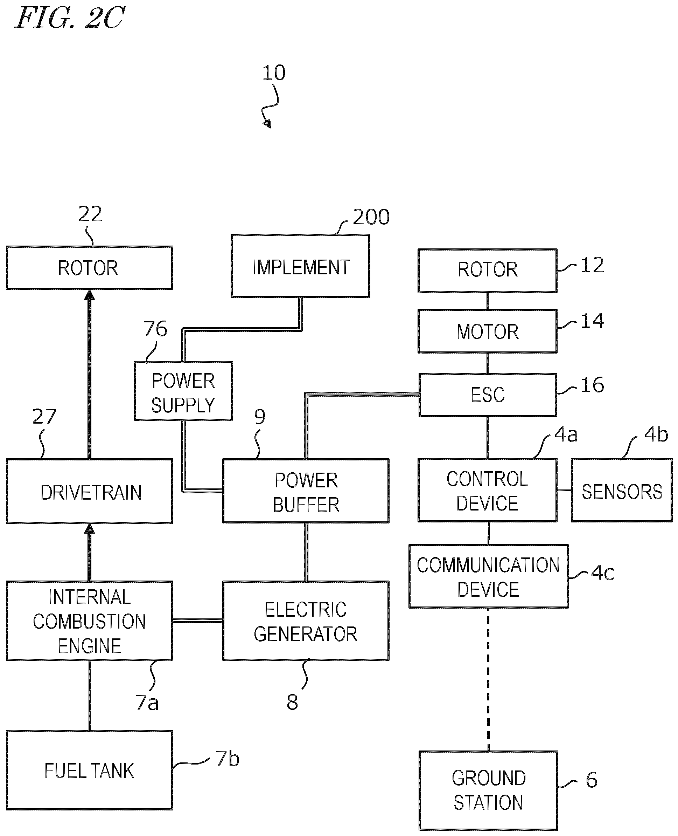

FIG. **2A** shows a block diagram of a basic configuration example of a battery-driven multicopter **10.** The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to Figs. **2B** and **2C****.** The ESC **16** may be included in the control device **4a.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

The following describes configuration examples and operation examples of an unmanned aircraft according to embodiments of the present disclosure, taking a parallel hybrid drive multicopter as an example.

### <Basic Configuration>

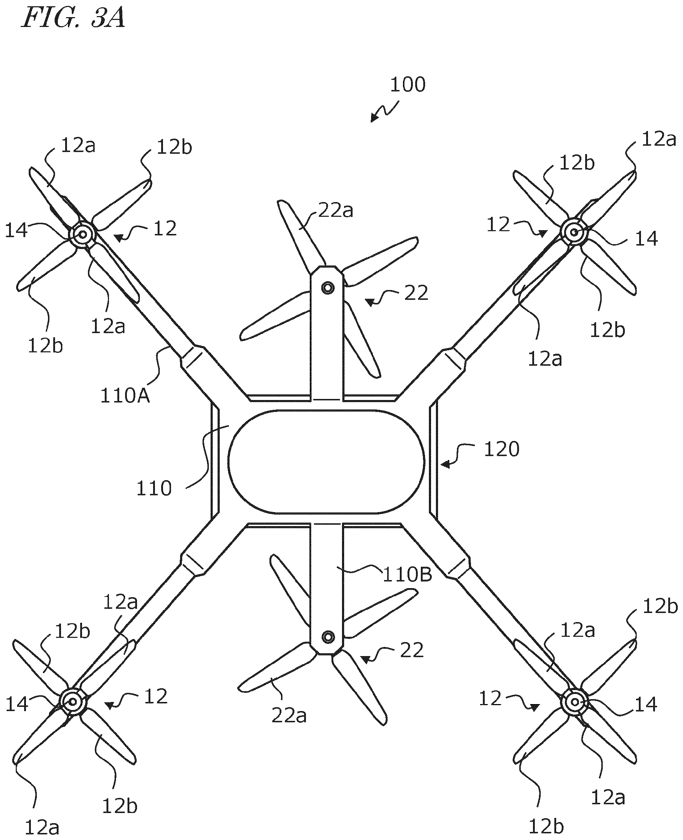

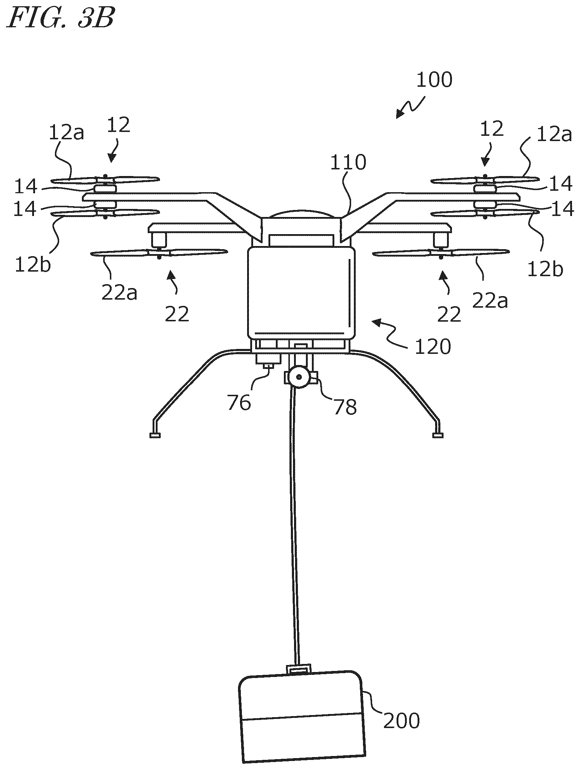

FIG. **3A** is a top view schematically showing a multicopter **100** according to the present embodiment, and FIG. **3B** is a side view thereof. In FIG. **3B****,** an implement **200** connected to the multicopter **100** is shown. The multicopter **100** may be connected with cargo, agricultural materials, other machinery, or containers, cases, or packages capable of accommodating them, together with or in place of the implement **200.** Hereinafter, the weight of the implement **200** and the implement itself may be referred to as "payload". FIG. **3B** shows that multicopter **100** includes a coupling device for suspending the implement **200.** The "coupling" between the multicopter **100** and the implement **200** or the like may be made by various devices or apparatuses.

The multicopter **100** shown in FIG. **3A** includes eight sub-rotors **12** and two main rotors **22.** The sub-rotors **12** include four sets of propellers **12a** and **12b** that rotate in opposite directions on the same axis. Each of propellers **12a** and **12b** includes two blades. The propellers **12a, 12b** are each rotated by motors **14.** The four sets of propellers **12a** and **12b** rotating in opposite directions on the same axis are located at vertices of a quadrilateral. The main rotors **22** include two propellers **22a** rotating in opposite directions at different positions. Each propeller **22a** includes four blades. The eight propellers **12a, 12b** of sub-rotor **12** have the same pitch angle and diameter. The two propellers **22a** of main rotor **22** also have the same pitch angle and diameter. The diameter of propeller **22a** is 1.2 times or more, for example, 1.4 times or more and 2.0 times or less, than the diameter of propellers **12a** and **12b.**

The multicopter **100** includes a body frame **110** including four arms **110A** for the sub-rotors **12** and two arms **110B** for the main rotors **22.** The body frame **110** supports a main body **120** containing various electronic components and mechanical components described later.

In the example of FIG. **3B****,** the main body **120** includes a power supply **76** and an actuator **78** used as a coupling device for connecting to the implement **200** and other purposes. The power supply **76** is a device that supplies power generated within the main body **120** to the implement **200.** The actuator **78** is a device such as an electric motor that performs operations for connecting the implement **200** to the main body **120** of the multicopter **100.** In the example of FIG. **3B****,** the actuator 78 drives a mechanism for winding up a cable connecting the main body **120** and the implement **200.** This cable may include a power line for supplying power to the implement **200** from the multicopter **100,** and a communication line for communication between the multicopter **100** and the implement **200.**

### <System Configuration>

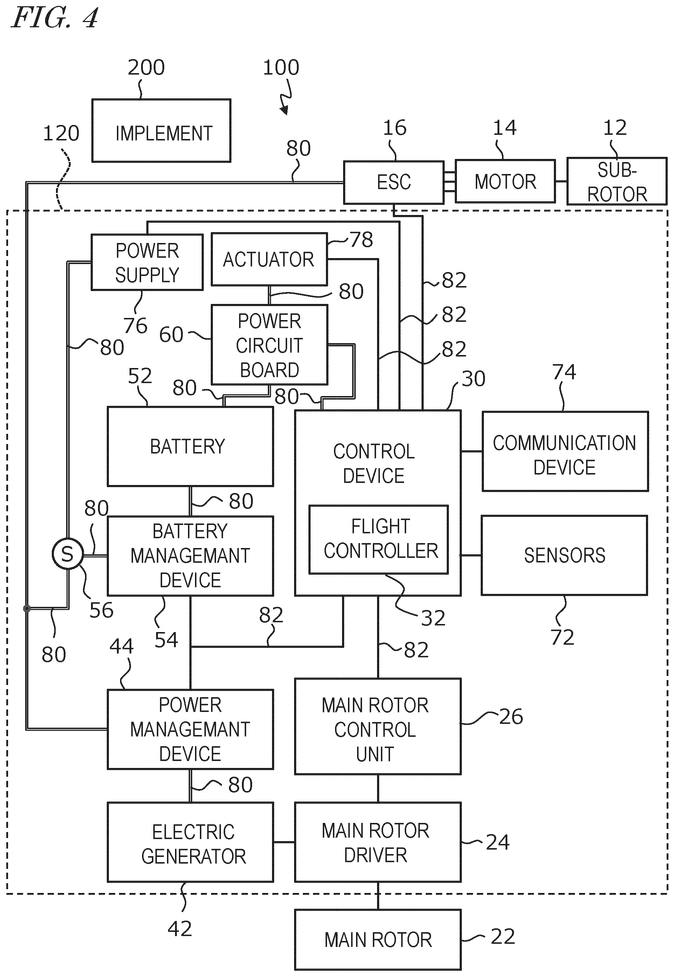

FIG. **4** is a block diagram showing an example of the system configuration of the multicopter **100** according to the present embodiment.

In the illustrated example, the main body **120** of the multicopter **100** includes a control device **30** containing a flight controller 32, sensors **72,** and a communication device **74.** These are basically similar to the control device **4a,** sensors **4b,** and communication device **4c** included in the main body 4 of the multicopter **10** explained with reference to FIG. **1A****.**

The multicopter **100** according to the present embodiment includes eight sub-rotors **12,** eight motors **14** that respectively rotate the eight sub-rotors **12,** and eight ESCs that respectively control the eight motors **14.** Each ESC **16** receives a motor control signal for controlling the motor **14** from the control device **30** via wiring **82.** The motor control signal is, for example, a PWM (Pulse Width Modulation) signal. When the motor control signal is a PWM signal, the duty cycle of the PWM signal may indicate an analog value of the motor rotation speed. Each ESC **16** controls the rotation speed of the motor **14** connected to that ESC **16** based on the motor control signal from the control device **30.** In FIG. **4****,** for simplicity, one set of "sub-rotor **12,** motor **14** and ESC **16"** is shown, but the multicopter **100** according to the present embodiment includes eight sets of "sub-rotor **12,** motor **14** and ESC **16".** The number of these sets is not limited to eight.

The control device **30** is connected to individual ESCs **16** via electrically independent wiring **82** and may individually control each of the eight ESCs **16.** As mentioned earlier, the sub-rotor **12** is used not only for generating lift but also for attitude control. Attitude control is achieved by the flight controller **32** of the control device **30** obtaining measured or estimated values indicating the attitude of the main body **120** from the sensors **72** to determine the current attitude of the main body **120,** and controlling the rotation speed of individual motors **14** according to the difference from the target attitude.

The main body **120** includes a main rotor driver **24** that drives the main rotor **22** and a main rotor control unit **26** that controls the main rotor drive component **24.** In this embodiment, the main rotor drive component **24** is an internal combustion engine. Therefore, the main rotor control unit **26** includes an Engine Control Unit (ECU). The main rotor control unit **26** is configured to execute control of the internal combustion engine by acquiring sensor data such as throttle opening, intake temperature, engine speed, and temperature of various portions of the main rotor drive component **24,** which is an internal combustion engine. The main rotor control unit **26** is connected to the control device **30** via wiring **82** such as a CAN (Controller Area Network) bus. The main rotor control unit **26** is configured to output engine control signals based on signals transmitted from the control device **30.** The engine control signal includes, for example, throttle opening. A digital-to-analog converter (DAC) and/or voltage converter may be connected between the control device **30** and the main rotor control unit **26.** Mechanical devices such as a clutch and reduction gear may be provided between the main rotor driver **24** and the main rotor **22.**

The main rotor driver **24** preferably is an internal combustion engine with minimal vibration. In this embodiment, the main rotor driver **24** is, for example, an opposed piston engine. The opposed piston engine is disclosed in, for example, Japanese Patent No. 5508604. The entire contents of Japanese Patent No. 5508604 are hereby incorporated by reference.

The main rotor driver **24,** which is an internal combustion engine, may drive an electric generator **42** such as an alternator to generate power. In this embodiment, the electric generator **42** has the structure of an AC synchronous motor including a rotor and a stator. Therefore, the electric generator **42** may also function as a "starter" by rotating the rotor through energization during startup of the main rotor driver **24.** The electric generator **42** rectifies the alternating current generated by power generation to convert it to direct current. The electric generator **42** generates direct current power required for driving the motor **14** and supplies it to each ESC **16** via wiring **80.** The electric generator **42** is configured to output, for example, a direct current voltage of 250V or higher. Note that the wiring **80** is power wiring, and the wiring **82** is signal wiring. Each of wirings **80** and **82** includes a plurality of conductors.

The electric generator **42** is connected to a power management device **44.** The power management device **44** is connected to the control device **30** and a battery management device **54** to be described later. The power management device **44** may control the amount of power generation by the electric generator **42** based on signals from the control device **30** or the battery management device **54.** This amount of power generation may be variably controlled by the power management device **44** according to the power required by the motor **14** and battery **52,** even when the engine speed of the main rotor driver **24,** which is an internal combustion engine, is in a constant state.

The main body **120** further includes a battery **52** including a plurality of cells of, for example, lithium-ion secondary batteries connected in series or parallel, and a battery management device **54** that controls charging and discharging of the battery **52.**

The battery **52** may receive direct current power from the electric generator **42** via a power switch **56** and be charged by that power. The operation of the power switch **56** may be controlled by the battery management device **54** and the control device **30.** The battery management device **54** is a device that measures or estimates parameter values defining the state of battery **52,** such as current flowing through battery **52,** cell voltage, cell balance, State Of Charge (SOC), State Of Health (SOH), and temperature.

The battery management device **54** may control the power switch **56** according to the state of the battery **52.** For example, when the battery **52** is in a state requiring charging, the battery management device **54** electrically connects the electric generator **42** and battery **52** by means of the power switch **56,** and supplies power from the electric generator **42** to the battery **52** to execute charging operation. At this time, the battery management device **54** may control the power management device **44** and increase the amount of power generation by the electric generator **42** so that the power supplied to ESC **16** does not fall below a desired level. In contrast, when the battery **52** is in a state not requiring charging, the battery management device **54** disconnects the electrical connection between the electric generator **42** and battery **52** by the power switch **56,** thereby stopping the charging of the battery **52.**

In this embodiment, the battery **52** has a power storage capacity that allows, even when power generation by the electric generator **42** stops for some reason and lift from the main rotor **22** is lost, continued generation of lift and attitude control by the sub-rotor **12** to fly to a location where landing is possible and land there. In other words, when the multicopter **100** according to this embodiment is flying normally, the power required to drive the sub-rotor **12** can be supplied to ESC **16** from the electric generator **42** rather than from the battery **52.** Therefore, even when increasing payload and flight duration, there is little need to increase the power storage capacity of battery **52** accordingly.

The power stored in battery **52** may be output as, for example, a direct current voltage of 250V or higher. However, this direct current voltage decreases with decreasing state of charge. Therefore, when the state of charge falls below a predetermined level, the battery management device **54** operates to supply a portion of the direct current power from the electric generator **42** to battery **52** to charge battery **52.**

The battery **52** is connected to a power circuit board **60.** The power circuit board **60** has the function of stepping down the voltage output from battery **52** to, for example, 24V, 12V, and 5V. The direct current voltage output from battery **52** is converted to a desired voltage by the power circuit board **60** before being supplied to other electronic components. In the example of FIG. **4****,** power stepped down by the power circuit board **60** is supplied to the control device **30** and actuator **78** via wiring **80.**

In the example of FIG. **4****,** the power supply **76** is electrically connected to the electric generator **42** or battery **52** via the power switch **56.** The power supply **76** in this example is configured to supply power generated within the main body **120** to external machines or devices such as the implement **200.**

The main body **120** may have configurations not shown in FIG. **4****.** For example, the main body **120** may include a fuel tank for storing fuel required for operation of the main rotor driver **24,** water-cooled or air-cooled devices for cooling the main rotor driver **24,** and electrical equipment such as lighting devices and electric pumps. The electrical equipment may operate on power stepped down to a predetermined voltage by the power circuit board 60. Additionally, a battery (auxiliary battery) for electrical equipment may be provided and configured to supply power to the electrical equipment. Such an auxiliary battery may be charged from the battery **52** or the electric generator **42.**

In this embodiment, the motor **14** functions as a plurality of "attitude control devices" that respectively drive a plurality of first rotors (sub-rotors) **12.** Additionally, the main rotor driver **24,** which is an internal combustion engine, functions as a "main thrust generating device" that drives the second rotor (main rotor) **22.**

In this embodiment, the control device **30** can vary the ratio (thrust ratio) between the total thrust from the sub-rotors **12** obtained from the plurality of motors **14** (first thrust) and the total thrust from the main rotors **22** obtained from the main rotor driver **24** (second thrust).

Generally, the responsiveness of motor **14** is superior to that of internal combustion engines. Regarding the torque required for rotation of rotors **12** and **22,** when the time from the input of a torque command signal to the achievement of the torque target value is called the "response time", the response time of motors is, for example, about 1/100 of that of internal combustion engines. Therefore, to control the attitude of the multicopter **100,** it is desirable to detect the difference between the current value and target value of the attitude angle of the multicopter **100,** and control the rotation speed of each of the plurality of sub-rotors **12** with high response speed to reduce this difference. An increase in rotor rotation speed generates an increase in thrust. By adjusting the thrust of each of the plurality of sub-rotors **12,** it is possible to control the attitude of the multicopter **100** with high precision and quickly.

In contrast, internal combustion engines efficiently generate large thrust. While the rotation of sub-rotor **12** is performed using power generated by the power of the main rotor driver **24,** which is an internal combustion engine, energy loss occurs when converting mechanical energy to electrical energy. Therefore, from the viewpoint of improving energy consumption efficiency, it is preferable that the main rotor driver **24** be used for main thrust generation by rotating the main rotor **22.** Additionally, to increase the thrust of main rotor **22,** it is preferable that the diameter of each main rotor **22** be larger than the diameter of each of the plurality of sub-rotors **12.**

### <Operation Examples When Abnormality is Detected>

In the example shown in FIG. **4****,** the electric generator **42** and battery **52** function as power sources of the multicopter **100.** From these power sources, power (first power) is supplied to the plurality of motors **14,** power (second power) is supplied to the external implement **200,** and power (third power) for charging is supplied from the electric generator **42** to the battery **52.** The control device **30** controls the supply of first power from the power source to the plurality of electric motors **14,** and the supply of second power from the power source to the implement **200** via the power supply **76.** In the example of FIG. **4****,** the control device **30** can control the supply of power from the electric generator **42** or battery **52** to the implement **200** by controlling the power switch **56.** Additionally, the control device **30** can control the supply of power from the battery **52** to the plurality of motors **14** by controlling the power switch **56.** Furthermore, the control device **30** can control the supply of power from the electric generator **42** to the plurality of motors **14** by controlling the power management device **44.**

In this embodiment, the sensors **72** include at least one sensor that measures the throttle opening, intake temperature, engine speed, and/or temperature of various components of the main rotor driver **24,** which is an internal combustion engine, and outputs sensor data indicating these measurements. This sensor data is used not only for controlling the internal combustion engine but may also be used for detecting abnormalities in the internal combustion engine. The sensors **72** may also include sensors for detecting abnormalities in other devices, such as the electric generator **42,** main rotor **22,** power transmission system to the main rotor **22,** and/or fuel supply system to the internal combustion engine. More specifically, the sensors **72** may include sensors that detect, for example, output voltage or output current of the electric generator **42,** rotation speed of the rotor of the electric generator **42,** rotation speed of the main rotor **22,** rotation speed of gears included in the power transmission system of the main rotor **22,** remaining amount of fuel in the fuel tank, temperature of the fuel tank, temperature of cooling water of the internal combustion engine, or rotation speed or torque of the output shaft of the internal combustion engine. The control device **260** may be configured to monitor the state of at least one of the internal combustion engine, electric generator, main rotor **22,** power transmission system to the main rotor **22,** and fuel supply system to the internal combustion engine based on the output from one or more such sensors.

The control device **30** can detect abnormalities in equipment included in the multicopter **100** based on sensor data output from at least one sensor included in the sensors **72.** For example, the control device **260** can detect abnormalities in the state of at least one of the internal combustion engine, electric generator, main rotor **22,** power transmission system to the main rotor **22,** and fuel supply system to the internal combustion engine. When the control device **30** detects an abnormality in the equipment, it stops the supply of power to the implement **200** and maintains the supply of power to the plurality of electric motors **14** to execute flight using the plurality of sub-rotors **12.** For example, when the control device **30** detects an abnormality in the equipment while flying the multicopter **100** while supplying power to the implement **200** via the power supply **76,** it operates in an emergency flight mode where it stops power supply to the implement **200** and flies the multicopter **100.** More specifically, when the control device **30** detects an abnormality in the equipment while executing flight by controlling the plurality of motors **14** and the main rotor driver **24** (internal combustion engine) while supplying power to the implement **200,** it controls the power switch **56** to stop the supply of power from the electric generator **42** and battery **52** to the implement **200.** At this time, the control device **30** maintains the supply of power from the battery **52** to the plurality of electric motors **14** to continue flight using the plurality of sub-rotors **12.** When the equipment abnormality is an abnormality in the main rotor **22** drive system, the control device **30** stops the operation of the main rotor **22** via the main rotor control unit **26** and continues flight by driving only the sub-rotors **12.** Here, the drive system of the main rotor **22** includes the main rotor **22,** power transmission system to the main rotor **22,** internal combustion engine, electric generator **42,** and fuel supply system to the internal combustion engine. When the multicopter **100** is flying by driving only the sub-rotors **12,** the rotation speed of each sub-rotor **12** may be increased to compensate for the decrease in thrust due to the stopping of the main rotor **22.** After stopping the power supply to the implement **200** and the operation of the main rotor **22,** the control device **30** may fly the multicopter **100** to a position above a possible landing point by driving only the sub-rotors, and land the multicopter **100** at that point by decreasing the rotation speed of each sub-rotor **12.**

With such operation, when an equipment abnormality (e.g., failure) occurs during flight involving ground operations by the implement **200,** it is possible to suppress the loss of energy from the battery **52** due to power supply to the implement **200,** and to secure sufficient time for flight in emergency flight mode. This makes it possible, even when the main rotor **22** cannot be driven due to a malfunction in the drive system of the main rotor **22,** to continue flight by driving only the sub-rotors **12** and to fly the multicopter **100** to a point where landing is possible.

Note that when the control device **30** detects an equipment abnormality, instead of stopping power supply to the implement **200,** it may reduce the amount of power supplied to the implement **200.** The control device **30** may adjust the amount of power supply to the implement **200** based on the amount of power required until landing and the remaining amount of energy stored in the battery **52** (power source). For example, the control device **30** may restrict the power supply to the implement **200** to be smaller as the value obtained by subtracting the estimated power amount required until landing from the energy remaining amount of the battery **52** at the time abnormality is detected becomes smaller. With such control, it is possible to drive the implement **200** within possible limits even when an abnormality occurs.

Thus, in this embodiment, even when power supply from the electric generator **42** to the plurality of motors **14** is stopped due to an abnormality in equipment such as the internal combustion engine or electric generator **42,** it is possible to stop or limit power supply to the implement **200** and maintain power supply from the battery **52** to the plurality of motors **14.** This allows the multicopter **100** to continue flying for a while by driving only the plurality of sub-rotors **12.** By incorporating such a function based on a failsafe concept, it is possible to continue the flight of the multicopter **100** even when an equipment abnormality occurs, and to land the multicopter **100** at a possible landing point.

To implement such functions, in this embodiment, the battery management device 54 controls charging to always maintain the state of charge (SOC) of the battery **52** at or above a certain level when there is no abnormality in the equipment. For example, while flying using the plurality of sub-rotors **12** and the main rotor **22** with the implement **200** being driven, the battery management device 54 may maintain the state of charge of the battery **52** at a value higher than a threshold (for example, 80%) required for the operation of continuing flight by the plurality of sub-rotors **12** and then landing when an equipment abnormality is detected. The threshold may be set within a range of, for example, 70% to 90%. This threshold may be set to an appropriate value according to the total weight of the multicopter **100** and the implement **200.** For example, the control device **30** may obtain information about the weight of the implement **200** suspended by the coupling device of the multicopter **100,** and change the threshold according to that weight. When the weight of the implement **200** is known and the information about that weight is recorded in advance in a storage device, the control device **30** can obtain the information about the weight of the implement **200** from that storage device. Alternatively, the sensors **72** may include a sensor that measures the weight of the implement **200** suspended from the multicopter **100.** In that case, the control device **30** can obtain information about the weight of the implement **200** from the measurement value of that sensor. Additionally, the control device **30** may estimate the weight of the implement **200** based on, for example, the rotation speeds of the plurality of sub-rotors **12** and the main rotor **22** during hovering, and the known weight of the multicopter **100.** Various types of implements **200** may be connected to the coupling device of the multicopter **100.** Additionally, when the implement **200** performs operations such as spraying or harvesting, the weight of the implement **200** (i.e., payload) may vary as the operation progresses. By measuring the weight of the implement **200** with a sensor or estimating it based on the rotation speed of each rotor, it is possible to appropriately obtain information about the weight of the implement **200,** which may vary.

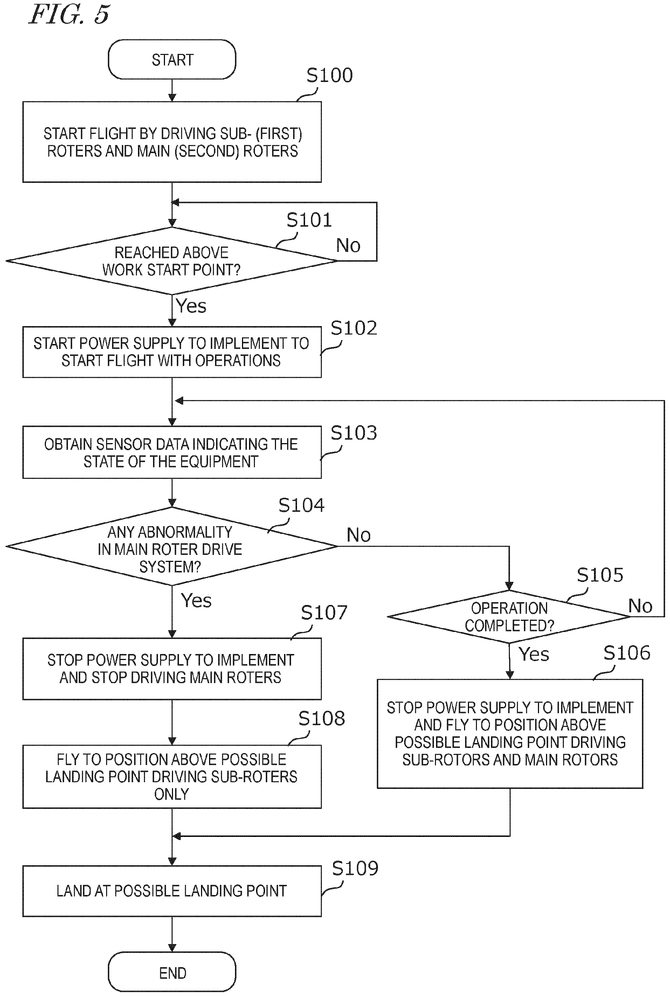

Next, referring to FIG. **5****,** an example of operation that transitions to emergency flight mode when an abnormality occurs in the equipment such as the drive system of the main rotor **22** during flight will be explained. FIG. **5** is a flowchart showing an example of operation by the control device **30.** In this example, the multicopter **100** automatically flies along a predetermined flight path while driving the implement **200** to perform a specified agricultural work.

First, in step **S100,** the control device **30** starts flight of the multicopter **100** by driving each sub-rotor **12** (first rotor) and each main rotor **22** (second rotor). The control device **30** drives each sub-rotor **12** by controlling the plurality of ESCs **16** to rotate the plurality of motors **14.** The control device **30** also drives each main rotor **22** by controlling the main rotor control unit **26** to drive the main rotor driver **24** (internal combustion engine). The rotation speeds of each main rotor **22** and each sub-rotor **12** may be determined based on a predetermined thrust ratio between the main rotor **22** and the sub-rotor **12.** The start of flight may be performed by user operation using an operation device, or according to a preset program.

In step **S101,** the control device **30** determines whether the multicopter **100** has reached a position above the work start point. The work start point is, for example, a point to start agricultural work in a field. The control device **30** can determine whether the multicopter **100** has reached a position above the work start point based on the position of the multicopter **100** measured by the GNSS receiver included in the sensors **72** and map data of an area including the field. When the multicopter **100** reaches a position above the work start point, the process proceeds to step **S102.**

In step **S102,** the control device **30** starts power supply to the implement **200** and starts flight with operations by the implement **200** (hereinafter may be referred to as "operation flight"). Power supply to the implement **200** may be executed by controlling the power switch **56** to electrically connect the electric generator **42** and the power supply **76.**

In step **S103,** the control device **30** obtains sensor data indicating the state of the equipment from the sensors **72.** The sensor data may include data indicating the state of the main rotor **22** drive system. The sensor data may include data indicating, for example, the output voltage or output current of the electric generator **42,** rotation speed of the rotor of the electric generator **42,** rotation speed of the main rotor **22,** rotation speed of gears included in the power transmission system of the main rotor **22,** remaining amount of fuel in the fuel tank, temperature of the fuel tank, temperature of cooling water of the internal combustion engine, and/or rotation speed or torque of the output shaft of the internal combustion engine.

In step **S104,** the control device **30** determines whether an abnormality in the main rotor **22** drive system has been detected based on the sensor data. When an abnormality is detected (Yes), the process proceeds to step **S107.** When no abnormality is detected (No), the process proceeds to step **S105.**

In step **S105,** the control device **30** determines whether the operation by the implement **200** has been completed. The control device **30** may determine that the operation has been completed when, for example, the position of the multicopter **100** measured by the GNSS receiver is above a predetermined operation end point. When the operation is completed (Yes), the process proceeds to step **S106.** When the operation is not completed (No), the process returns to step **S103.**

In step **S106,** the control device **30** stops power supply to the implement **200** and flies the multicopter **100** to a position above a possible landing point by driving each sub-rotor **12** and each main rotor **22.** The possible landing point is, for example, a predetermined point such as a point in the field where agricultural work is not performed (for example, headland), a storage location for the multicopter **100,** or a supply point where agricultural materials such as chemicals or fertilizers are supplied to the multicopter **100.** When the multicopter **100** reaches a position above the possible landing point, the process proceeds to step **S109.**

When an abnormality in the main rotor **22** drive system is detected in step **S104,** the process proceeds to step **S107.** In step **S107,** the control device **30** stops the power supply to the implement **200** and the driving of the main rotor **22.** Note that instead of completely stopping the power supply to the implement **200,** the amount of power supplied to the implement **200** may be reduced. At this time, the control device **30** controls the power switch **56** to stop the supply of power from the electric generator **42** and the battery **52** to the power supply **76,** and starts the supply of power from the battery **52** to the plurality of motors **14.** Note that the control device **30** may control the power supply to the implement **200** by controlling a switch included in the power supply **76** instead of controlling the power switch **56.**

In step **S108,** the control device **30** flies the multicopter **100** to a position above a possible landing point by driving only the sub-rotors **12.** This possible landing point may be a different point from the possible landing point in step **S106.** In step **S108,** since the sub-rotors **12** are driven by power stored in the battery **52,** it may not be possible to continue flying for very long. Therefore, in step **S108,** the control device **30** may be configured to fly the multicopter **100** to the position above a possible landing point that is relatively close to the position where the power supply to the implement **200** and driving of the main rotor **22** were stopped. When the multicopter **100** reaches a position above the possible landing point, the process proceeds to step **S109.**

In step **S109,** the control device **30** lands the multicopter **100** at the possible landing point by decreasing the rotation speed of each rotor.

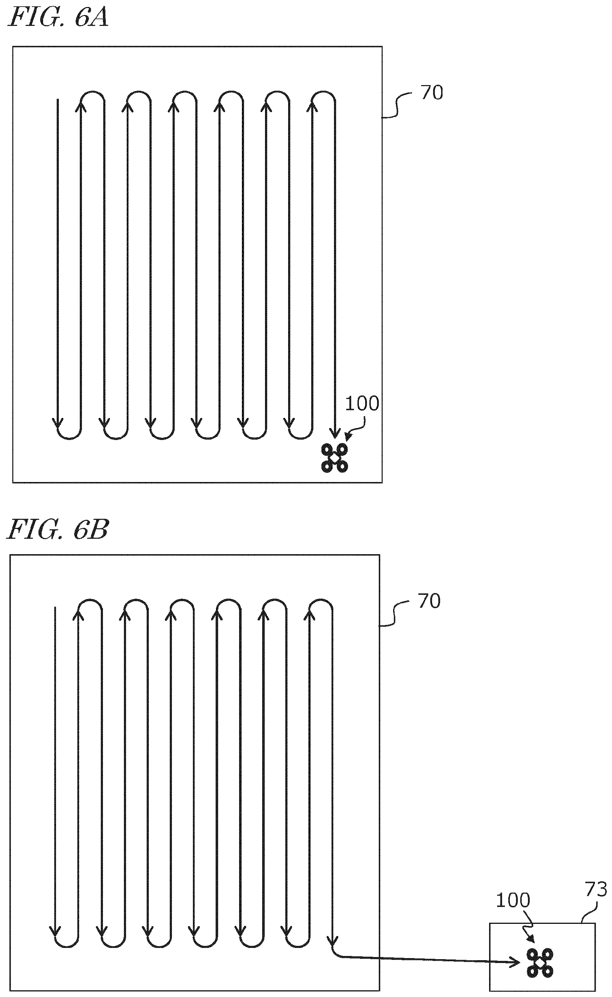

FIG. **6A** is a plan view showing an example of a flight path of the multicopter **100** according to this embodiment. In this example, the multicopter **100** flies in the field 70 while performing agricultural work such as spraying fertilizer or pesticide, or mowing grass using the implement **200.** Therefore, the flight path of the multicopter **100** is regularly serpentine as indicated by arrows in the figure. The control device **30** can perform necessary ground operations on the crop area in the field **70** or on the ground itself by controlling the position, altitude, and attitude of the multicopter **100** with high precision. For such operations, the flight altitude on the flight path may be controlled to a preferable level of, for example, 0.1 m or more and 5 m or less.

In the example of FIG. **6A****,** no abnormality occurs in any equipment included in the multicopter **100** during agricultural work in the field **70.** Therefore, after completing the agricultural work, the control device **30** stops the implement **200** and lands the multicopter **100** at a possible landing point in the outer periphery of the field **70** (for example, headland). Note that the multicopter **100** may, as shown in FIG. **6B****,** stop the implement **200** after completing the agricultural work, and fly to and land in area **73** outside the field **70.** Area **73** is, for example, a predetermined place such as a storage location for the multicopter **100** or a supply point for agricultural materials.

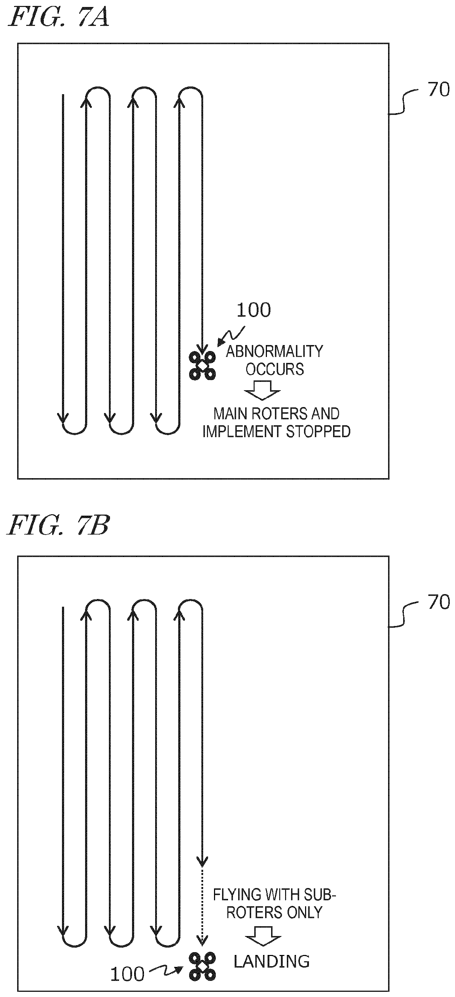

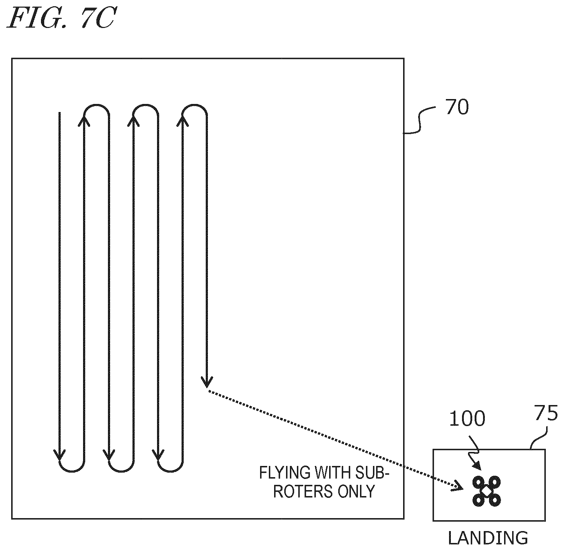

FIG. **7A** is a figure showing an example of operation when an abnormality occurs in equipment included in the multicopter **100,** for example, in the main rotor **22** drive system, during operation. In this example, the control device **30** has detected that an abnormality has occurred in the main rotor **22** drive system (for example, the internal combustion engine or the electric generator **42)** while the multicopter **100** is performing operation flight by driving the implement **200** in the field **70.** In this case, the control device **30** stops the driving of the main rotor **22** and the implement **200** and, as shown in FIG. **7B****,** continues flight by driving only the sub-rotors **12,** and lands at a possible landing point. Note that, as mentioned earlier, instead of stopping power supply to the implement **200,** it may continue ground operations to the extent possible by reducing the amount of power supply to the implement **200.** In the example of FIG. **7B****,** the control device **30** lands the multicopter **100** at a possible landing point in the headland of the field **70** where operations are not performed. Not limited to this example, for example, as shown in FIG. **7C****,** the control device **30** may fly the multicopter **100** by driving only the sub-rotors **12** to a landable area **75,** which is outside the field **70,** and land there. Area **75** may be the same area as area **73** shown in FIG. **6B****.** However, when the weight of the implement **200** (i.e., payload) is large or when the power storage capacity of the battery **52** is small, the distance that can be flown by driving only the sub-rotors **12** may be short, making it difficult to fly to area **73** shown in FIG. **6B****.** In that case, the control device **30** lands the multicopter **100** at a possible landing point near the area where operations are performed in the field **70.** Note that the position information of possible landing points is stored in advance in the storage device, and the control device **30** can move the multicopter **10** to a possible landing point based on that position information and positioning results from the GNSS receiver.

As described above, the control device **30** according to this embodiment can, when it detects an abnormality in equipment included in the multicopter **100** during operation flight, stop or reduce the power supply to the implement **200,** and continue flight by driving the plurality of sub-rotors **12** while maintaining the power supply to the plurality of electric motors **14.** In particular, the control device **30** may, when it detects an abnormality in the internal combustion engine (main rotor driver **24),** electric generator **42,** main rotor **22,** power transmission system to the main rotor **22,** or fuel supply system to the internal combustion engine, stop or limit the power supply to the implement **200** and the driving of the main rotor **22,** and continue flight by driving only the sub-rotors **12.** With such control, since flight can be continued for a while by the sub-rotors **12** after an abnormality is detected, the multicopter **100** can be appropriately landed at a possible landing point.

In this embodiment, the multicopter **100** automatically flies along a predetermined flight path, but the multicopter **100** may fly according to a user's operation using an operation device. Even in that case, when the control device **30** detects an equipment abnormality during operation flight, it may stop or reduce the power supply to the implement **200** and continue flight by driving the sub-rotors **12.**

The multicopter **100** according to this embodiment has a parallel hybrid drive type configuration, but it may have other configurations, for example, a battery-driven type (see FIG. **2A****)** or a series hybrid drive type (see FIG. **2B****)** configuration. The following explains an example of applying the control method of this disclosure to a battery-driven multicopter.

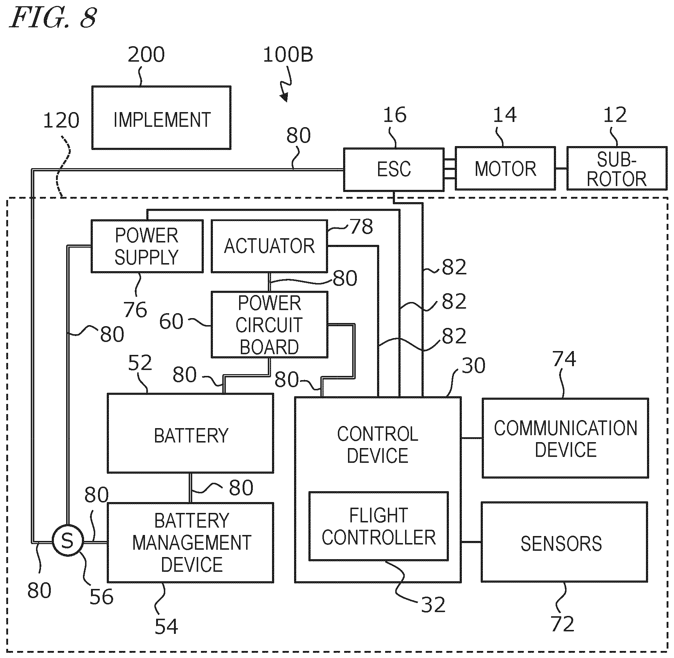

FIG. **8** is a block diagram showing an example of system configuration of a battery-driven multicopter **100B.** The configuration shown in FIG. **8** corresponds to the configuration shown in FIG. **4** without the main rotor **22,** main rotor driver **24,** main rotor control unit **26,** electric generator **42,** and power management device **44.** The multicopter **100B** shown in FIG. **8** does not have a main rotor **22** and flies by the rotation of multiple rotors **12** driven by the battery **52.**

In the example of FIG. **8****,** the sensors **72** may include at least one sensor that senses the operational state of each rotor **12,** each motor **14,** or each ESC **16.** The control device **30** can detect abnormalities in any of the equipment of rotor **12,** motor **14,** or ESC **16** based on sensor data output from that sensor. When the control device **30** detects an abnormality in any of the equipment during operation flight, it may be configured to stop or reduce the power supply to the implement **200,** stop the rotation of the rotor **12** corresponding to the equipment with the abnormality, and continue flight by rotating only the remaining rotors **12.** At this time, to suppress thrust imbalance due to the stopping of the rotor **12,** another rotor **12** positioned diagonally opposite to the rotor **12** corresponding to the equipment with the abnormality may also be stopped. By stopping or reducing the power supply to the implement **200,** it is possible to suppress the decrease in the stored power of the battery **52,** making it easier to fly to a landing point by driving the remaining sub-rotors **12.**

In the above examples, operations when an abnormality in the drive system of the main rotor **22** or sub-rotor **12** is detected have been explained, but similar control may be applied when abnormalities in other equipment are detected. For example, when abnormalities occur in the communication device **74,** sensors **72,** or other electrical equipment, it may be required to stop operation flight and land at an appropriate place for maintenance. Therefore, when the control device **30** detects abnormalities in the communication device **74,** sensors **72,** or other electrical equipment based on sensor data, it may stop or limit the power supply to the implement **200,** perform minimal flight by driving the sub-rotors **12** (and, if possible, the main rotors **22),** and control the flight of the multicopter **100** to land at an appropriate location.

The control device **30** according to the embodiments of this disclosure may be implemented by a digital computer system programmed to execute the various processes explained with reference to FIGS. **5** to **8****.**

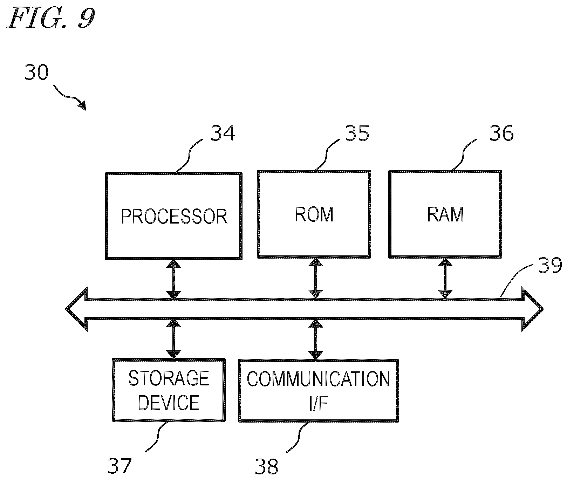

FIG. **9** is a block diagram showing an example of the hardware configuration of the control device **30.** The control device **30** includes a processor **34,** ROM (Read Only Memory) **35,** RAM (Random Access Memory) **36,** storage device **37,** and communication I/F **38.** These components are interconnected via a bus **39.**

The processor **34** is one or more semiconductor integrated circuits, also referred to as a central processing unit (CPU) or microprocessor. The processor **34** sequentially executes computer programs stored in ROM **35** to implement the aforementioned processing. The term processor **34** is broadly interpreted to encompass devices such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **30** and other electronic components or electronic control units (ECUs). For example, the communication I/F **38** may perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** and various sensor data acquired by the multicopter **10** during flight.

Note that, as mentioned earlier, the control device **30** may include, as separate components, a flight control device such as the flight controller **32** and a higher-level computer (companion computer). The companion computer may execute each process shown in FIG. **5** and provide flight-related commands to the flight controller based on the results of those processes.

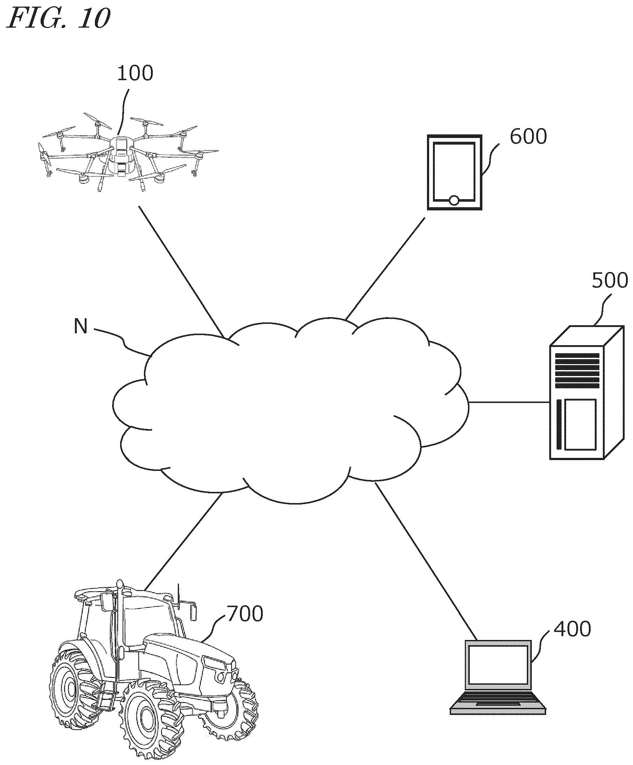

Additionally, some or all of the functions of the control device **30** may be implemented by one or more servers (computers) **500** or terminal devices (including portable and fixed types) **600** connected to the communication device **74** of the multicopter **100** via a communication network **N,** as shown in FIG. **10****.** Agricultural machines **700** such as tractors may be connected to this communication network **N,** and communication may be performed between the multicopter **100** and the agricultural machines **700.** Through the communication network **N,** a portion of the data used for processing by the control device **30** and control signals for the multicopter **100** may be provided to the multicopter **100** from the agricultural machines **700.**

This specification discloses unmanned aerial vehicles, control systems, and control methods described in the following items.

[Item 1] An unmanned aerial vehicle comprising:
a plurality of rotors;
a plurality of electric motors, each configured to drive a respective one of the plurality of rotors;
a power source;
a coupling device to couple an implement that performs ground operations; and
a control device to control supply of first electric power from the power source to the plurality of electric motors and supply of second electric power from the power source to the implement, and control operation of the plurality of electric motors; wherein
upon detecting an abnormality in equipment included in the unmanned aerial vehicle, the control device stops the supply of the second electric power to the implement and maintain the supply of the first electric power to the plurality of electric motors to execute flight using the plurality of rotors.

[Item 2] The unmanned aerial vehicle according to Item 1, wherein upon detecting the abnormality while executing flight by controlling the plurality of electric motors while supplying the second electric power to the implement, the control device stops the supply of the second electric power to the implement and maintain the supply of the first electric power to the plurality of electric motors to continue flight using the plurality of rotors, and then lands the unmanned aerial vehicle by decreasing the rotation speed of the plurality of rotors.

[Item 3] The unmanned aerial vehicle according to Item 1 or 2, wherein the plurality of rotors are a plurality of first rotors, and
the unmanned aerial vehicle further comprises:
at least one second rotor;
an internal combustion engine to drive the at least one second rotor; an electric generator that is driven by the internal combustion engine to generate third electric power; and
a battery to store the third electric power, wherein
the power source includes the electric generator and the battery; and
the control device monitors a state of at least one of the internal combustion engine, the electric generator, the second rotor, a power transmission system to the second rotor, and a fuel supply system to the internal combustion engine, and upon detecting an abnormality in the at least one state, stops the supply of the second electric power to the implement and maintains the supply of the first electric power to the plurality of electric motors to execute flight using the plurality of first rotors while stopping the at least one second rotor.

[Item 4] The unmanned aerial vehicle according to Item 3, further comprising a battery management device to control charging and discharging of the battery; wherein
while the implement is being driven by the second electric power and flight is being performed using the plurality of first rotors and the at least one second rotor, the battery management device maintains a state of charge of the battery at a value higher than a threshold required for an operation of continuing flight using the plurality of first rotors and then landing when the abnormality is detected.

[Item 5] The unmanned aerial vehicle according to Item 4, wherein the control device obtains information indicating a weight of the implement and changes a threshold for a state of charge according to the weight.

[Item 6] The unmanned aerial vehicle according to any one of Items 1 to 5, further comprising at least one sensor to output sensor data to detect the abnormality in the equipment, wherein the control device detects the abnormality in the equipment based on the sensor data.

[Item 7] A control system for an unmanned aerial vehicle including a plurality of rotors, a plurality of electric motors each configured to drive a respective one of the plurality of rotors, a power source, and a coupling device to couple an implement that performs ground operations, the control system comprising:
a control device to control supply of first electric power from the power source to the plurality of electric motors and supply of second electric power from the power source to the implement, and control operation of the plurality of electric motors; wherein
upon detecting an abnormality in equipment included in the unmanned aerial vehicle, the control device stops the supply of the second electric power to the implement and maintain the supply of the first electric power to the plurality of electric motors to execute flight using the plurality of rotors.

[Item 8] A control method for an unmanned aerial vehicle including a plurality of rotors, a plurality of electric motors each configured to drive a respective one of the plurality of rotors, a power source, and a coupling device to couple an implement that performs ground operations, the method comprising:
controlling supply of first electric power from the power source to the plurality of electric motors and supply of second electric power from the power source to the implement;
controlling operation of the plurality of electric motors;
detecting an abnormality in equipment included in the unmanned aerial vehicle; and
upon detecting the abnormality, stopping the supply of the second electric power to the implement and maintaining the supply of the first electric power to the plurality of electric motors to execute flight using the plurality of rotors.

### INDUSTRIAL APPLICABILITY

The unmanned aerial vehicle according to the present disclosure may be widely utilized not only for aerial photography, surveying, logistics, and agricultural chemical spraying applications but also for ground work related to agriculture, transportation of harvested crops and agricultural materials.

### REFERENCE SIGNS LIST

**2...** rotor (propeller), **3...**rotation drive device, **4...**main body, **4a...**control device, **4b...**sensors, **4c...**communication device, **5...**body frame, **10...**multicopter, **12...**sub-rotor, **14...**motor, **16...**ESC, **22...**main rotor, **24...**main rotor driver, **26...**main rotor control unit, **30...**control device, **42...**electric generator, **44...**power management device, **52...**battery, **54...**battery management device, **72...**sensors, **74...**communication device, **76...**power supply, **100...**multicopter, **200...**implement

## Claims

1. An unmanned aerial vehicle comprising:
a plurality of rotors;
a plurality of electric motors, each configured to drive a respective one of the plurality of rotors;
a power source;
a coupling device to couple an implement that performs ground operations; and
a control device to control supply of first electric power from the power source to the plurality of electric motors and supply of second electric power from the power source to the implement, and control operation of the plurality of electric motors; wherein
upon detecting an abnormality in equipment included in the unmanned aerial vehicle, the control device stops the supply of the second electric power to the implement and maintains the supply of the first electric power to the plurality of electric motors to execute flight using the plurality of rotors.

2. The unmanned aerial vehicle according to Claim 1, wherein upon detecting the abnormality while executing flight by controlling the plurality of electric motors while supplying the second electric power to the implement, the control device stops the supply of the second electric power to the implement and maintains the supply of the first electric power to the plurality of electric motors to continue flight using the plurality of rotors, and then lands the unmanned aerial vehicle by decreasing the rotation speed of the plurality of rotors.

3. The unmanned aerial vehicle according to Claim 1 or 2, wherein the plurality of rotors are a plurality of first rotors, and
the unmanned aerial vehicle further comprises:
at least one second rotor;
an internal combustion engine to drive the at least one second rotor; an electric generator that is driven by the internal combustion engine to generate third electric power; and
a battery to store the third electric power, wherein
the power source includes the electric generator and the battery; and
the control device monitors a state of at least one of the internal combustion engine, the electric generator, the second rotor, a power transmission system to the second rotor, and a fuel supply system to the internal combustion engine, and upon detecting an abnormality in the at least one state, stops the supply of the second electric power to the implement and maintains the supply of the first electric power to the plurality of electric motors to execute flight using the plurality of first rotors while stopping the at least one second rotor.

4. The unmanned aerial vehicle according to Claim 3, further comprising a battery management device to control charging and discharging of the battery; wherein
while the implement is being driven by the second electric power and flight is being performed using the plurality of first rotors and the at least one second rotor, the battery management device maintains a state of charge of the battery at a value higher than a threshold required for an operation of continuing flight using the plurality of first rotors and then landing when the abnormality is detected.

5. The unmanned aerial vehicle according to Claim 4, wherein the control device obtains information indicating a weight of the implement and changes a threshold for a state of charge according to the weight.

6. The unmanned aerial vehicle according to any one of Claims 1 to 5, further comprising at least one sensor to output sensor data to detect the abnormality in the equipment, wherein the control device detects the abnormality in the equipment based on the sensor data.

7. A control system for an unmanned aerial vehicle including a plurality of rotors, a plurality of electric motors each configured to drive a respective one of the plurality of rotors, a power source, and a coupling device to couple an implement that performs ground operations, the control system comprising:
a control device to control supply of first electric power from the power source to the plurality of electric motors and supply of second electric power from the power source to the implement, and control operation of the plurality of electric motors; wherein
upon detecting an abnormality in equipment included in the unmanned aerial vehicle, the control device stops the supply of the second electric power to the implement and maintains the supply of the first electric power to the plurality of electric motors to execute flight using the plurality of rotors.

8. A control method for an unmanned aerial vehicle including a plurality of rotors, a plurality of electric motors each configured to drive a respective one of the plurality of rotors, a power source, and a coupling device to couple an implement that performs ground operations, the method comprising:
controlling supply of first electric power from the power source to the plurality of electric motors and supply of second electric power from the power source to the implement;
controlling operation of the plurality of electric motors;
detecting an abnormality in equipment included in the unmanned aerial vehicle; and
upon detecting the abnormality, stopping the supply of the second electric power to the implement and maintaining the supply of the first electric power to the plurality of electric motors to execute flight using the plurality of rotors.
